Europäisches Patentamt

**European Patent Office**

Office européen des brevets

(19)

(11) Publication number: **0 233 691**
A1

(12)    **EUROPEAN PATENT APPLICATION**

(21) Application number: **87300263.8**

(22) Date of filing: **13.01.87**

(51) Int. Cl.³: **C 04 B 22/08**
C 04 B 28/04, C 04 B 24/12

(30) Priority: **17.01.86 US 820443**

(43) Date of publication of application:
**26.08.87 Bulletin 87/35**

(84) Designated Contracting States:
**AT BE CH DE FR GB IT LI NL SE**

(71) Applicant: **W.R. GRACE & CO.**
**55 Hayden Avenue**
**Lexington Massachusetts 02173(US)**

(72) Inventor: **Chin, David**
**3 Viking Court**
**Arlington Massachusetts 02174(US)**

(72) Inventor: **Durgin, Holly M.**
**17 Concord Street**
**Malden Massachusetts 02148(US)**

(74) Representative: **Lawrence, Peter Robin**
**Broughton et al,**
**GILL JENNINGS & EVERY 53-64 Chancery Lane**
**London WC2A 1HN(GB)**

(54) Additives for concrete.

(57) Admixtures for hydraulic cement compositions, and par-
ticularly Portland cement concrete compositions which con-
tain pozzolans such as fly ash, are described which are mix-
tures containing at least two chemical ingredients, namely,
alkali metal or alkaline earth metal salts of bromine and alkali
metal or alkaline earth metal nitrite salts. These admixtures
optionally further include triethanolamine as a third in-
gredient.

EP 0 233 691 A1

Additives for Concrete

A pozzolan is defined by the American Concrete Institute as "a siliceous or siliceous and aluminous material, which in itself possesses little or no cementitious value but will, in finely divided form and in the presence of moisture, chemically react with calcium hydroxide at ordinary temperatures to form compounds possessing cementitious properties". Raw or calcined natural pozzolans include such materials as diatomaceous earths, opaline cherts and shales, tuffs, volcanic ashes and pumicites. Man-made pozzolans are typified by fly ash (the finely divided residue that results from the combustion of coal) and blast furnace slag.

Portland cement is a product produced by heating a mixture of limestone and clay, shale or other calcareous and argillaceous materials to a fused state. The fused product, which is called clinker, is interground with a small amount, normally about 4 to 6 percent by weight, of a retarder such as gypsum. Portland cement is mixed with aggregate such as sand and stone to form a concrete having outstanding structural properties.

Pozzolans are commonly used in concrete and are either added to the concrete separately from the Portland cement at the concrete ready-mix plant or added together with the Portland cement as a special blended cement. The presence of a pozzolan in concrete increases the workability and decreases the bleeding characteristics of the fresh, plastic concrete. Pozzolans improve the properties of hardened concrete by reducing its shrinkage, reducing its permeability and ultimately increasing its strength. Early usage of pozzolan in concrete was as a substitute for part or all of the "fine" aggregate component such as sand.

Pozzolans are most often used in concrete as a partial replacement for Portland cement and the replacement of 20% or more of the cement with a pozzolan is not uncommon. Pozzolans contribute strength to concrete by reacting with the calcium hydroxide ($Ca(OH)_2$) that is liberated by the Portland cement, when it reacts with water, and forms reaction products similar to those produced by the cement-water reaction. The chemical reaction between the pozzolan and the calcium hydroxide is often referred to as the "pozzolanic reaction".

The "pozzolanic reaction" proceeds slowly and the strength contributed by the pozzolan is not significant until the concrete reaches 28 to 90 days of age. This means that a concrete in which a portion of the cement has been replaced with a pozzolan will have inherently lower compressive strength up to 28 to 90 days than the Portland cement concrete from which the pozzolan concrete was designed. A part of this strength reduction can be alleviated by altering the coarse and fine aggregate content of the pozzolan Portland cement concrete.

Certain chemical admixtures which have been formulated for use in Portland cement concrete also aid in off-setting the early strength deficiency of pozzolan Portland cement concrete. Such chemicals as salts of lignosulfonic acid, salts of hydroxylated carboxylic acids, sugars and corn syrups have been commonly used in concrete containing a pozzolan, but all of these materials delay the setting time of the concrete which already has an abnormally long setting time because of the pozzolan that is present.

Calcium chloride is frequently used as an admixture in Portland cement-pozzolan concrete to accelerate its set and enhance its early strength. The amount of calcium chloride dihydrate commonly used is in the range of 1 to 2% based on the weight of the cement. Other chloride salts such as sodium chloride have been suggested as accelerators for Portland cement-pozzolan concrete. Additions of chloride ion in amounts in excess of 0.35 percent on the weight of the cement pose a corrosion problem to any metal embedded in the concrete. Further, at high sodium additions (greater than 0.5 percent on the cement) problems are posed by alkali-aggregate reactions.

An admixture for pozzolan-containing Portland cement concrete that has been sold and used successfully for several years is constituted of a mixture of calcium lignosulfonate and triethanolamine (95% - 5% mixture). Other known admixtures include sodium and calcium thiocyanate, blends of potassium nitrate and sodium and/or calcium thiocyanate, calcium nitrite, and blends of calcium nitrite and triethanolamine. U.S. Patent No. 3,427,175 (to Angstadt et al), for example, discloses that the setting of Portland cements is accelerated by the addition of about 0.1 to 10 percent (by weight) of calcium nitrite. Although Angstadt's accelerator can be used together with other accelerators, he teaches that an accelerator preferably should be chloride-free.

There is a continuing need for alternative and/or improved non-chloride admixtures for enhancing early strength and accelerating the set of Portland and pozzolan/Portland cements.

The present invention concerns admixtures for hydraulic cements, concretes, and pozzolan-containing Portland cement concrete in particular, which (a) enhance the early (1 and 3 days) strength of the concrete, (b) accelerate the setting time of the concrete and (c) do not add corrosive chloride ions to the concrete. The present admixtures are a combination of two or more chemical substances which, when added together, produce strength improvement and reductions in setting time that, at least at several dosages, are unexpected and unexplainable in light of the results that the individual substances demonstrate in concrete. The admixtures can be used per se, or with other conventional additives, e.g., air-entraining additives.

The admixtures of the present invention contain at least two chemical substances "A" and "B". "A" is selected from any of the alkali metal and alkaline earth metal salts of nitrous acid (e.g., sodium nitrite, potassium nitrite, magnesium nitrite, calcium nitrite). "B" is selected from any of the alkali metal and alkaline earth metal salts of bromine (e.g., sodium bromide, potassium bromide, calcium bromide). Although "B", when added alone to Portland cements may slightly shorten setting time, and "A" added alone is known to accelerate set, dramatic set acceleration and early strength gains are seen at various dosages of "A" and "B" in combination.

The addition of "B" (bromide salt) to an admixture comprising "A" (e.g., calcium nitrite) plus triethanolamine further improves the set acceleration and early (3 days and 7 days) strength enhancing characteristics of such an admixture. At at least several dosage rates, the combination of "A", "B" and triethanolamine unexpectedly accelerates the set and increases the early strength of pozzolan/Portland cement concrete to extents greater than the sum of the acceleration and strength enhancement produced by "B" and "A" plus triethanolamine alone.

The useful dosage of "A" ranges from about 0.01 to 12 weight % (preferably 0.25 to 5 weight %), "B" ranges from about 0.01 to 6 weight % (preferably 0.05 to 1.0 weight %) and triethanolamine ranges from about 0.003 to 3 weight % (preferably 0.01 to 0.33 weight %) (all weight % being of active ingredient and based on the weight of cement). The ratio by weight A:B is generally from about 1:3 to 40:1. The ratio by weight A:B:C is generally from 1:3:0.03 to 40:1:5.4.

The inventive admixtures are added to concrete containing Portland cement binder and, optionally, from about 15 to about 25% of pozzolan, based upon the weight of cement. The concretes typically contain greater than 50% (by volume of the hardened concrete) of non-pozzolanic aggregate such as fine aggregate (sand) and coarse aggregate (stone).

In a number of laboratory experiments (of which only those presenting the most conclusive results are described in the following examples), concrete compositions containing Portland cements and

pozzolan (fly ash) from several sources were prepared. The chemical compositions of the individual cements and pozzolans are given in Table I. All Portland cements were of Type I and mixed at a rate of 500 pounds of cement per cubic yard of concrete ("pcy"). Pozzolan, when present, was added as a cement substitute to obtain a 400 pcy cement plus 100 pcy pozzolan mixture. Properties measured included "percent air" (ASTM C231), "slump" (ASTM C143), "setting time" (ASTM C403) and "compressive strength" (ASTM C31). The concretes contained, in addition to Portland cement and pozzolan, "coarse" aggregate (stone) and "fine" aggregate (sand) as conventionally employed in concrete.

In each of these experiments "A" (as calcium nitrite) was added in solution, the solution containing approximately 30% by weight of calcium nitrite. "A" also contained a minor proportion of calcium nitrate, which ranged from 1 to 5% by weight of solution. When the presence of triethanolamine was desired, the triethanolamine was added to the calcium nitrite solution to obtain a solution consisting of approximately 30% by weight of calcium nitrite and 2% by weight of triethanolamine. This solution was then added to the concrete at various dosages measured as weight % of active ingredient(s) based on the weight of the cement.

## TABLE I

### Composition of Portland Cements and Pozzolans Used in EXAMPLES

| | Portland Cement | | Fly Ash | |
| | Source A | Source B | Source F* | Source G* |
|---|---|---|---|---|
| % $SiO_2$ | 21.04 | 20.75 | 30.56 | 34.20 |
| % $Al_2O_3$ | 4.83 | 5.26 | 22.74 | 23.76 |
| % $Fe_2O_3$ | 3.14 | 2.86 | 6.28 | 7.00 |
| % $CaO$ | 62.04 | 64.00 | 30.75 | 27.13 |
| % $MgO$ | 4.55 | 2.22 | 3.06 | --** |
| % $SO_3$ | 2.54 | 2.66 | 2.97 | 2.23 |
| % L.O.I. | .88 | 1.51 | 0.32 | 0.33 |
| Fineness $cm^2/g$ | 3854 | 3578 | Fineness (+325 mesh) | 16.20 | 12.63 |
| | | | % Moisture | 0.07 | 0.06 |
| % $C_3S$ | 49 | 55.8 | -- | -- |
| % $C_2S$ | 23 | 17.4 | -- | -- |
| % $C_3A$ | 7 | 9.1 | -- | -- |
| % $C_4AF$ | 9 | 8.7 | -- | -- |

* Data for fly ash F and G each represent average values among several samples.

**(--) indicates that the criterion was not measured.

### Example One

A Portland cement (source B) and fly ash (source G) concrete, containing approximately 400 pcy cement, 100 pcy fly ash, 1460 pcy sand, 1770 pcy "coarse" aggregate and 280 pcy water was prepared ("blank"). Several admixtures according to the present invention are added at various addition rates (expressed as weight % based on the weight of the cement). A first such admixture comprised potassium bromide (KBr) plus calcium nitrite ($Ca(NO_2)_2$), and a second admixture comprised potassium bromide, calcium nitrite and triethanolamine (TEA). The pertinent test data, obtained when the mixes were allowed to set at 72°F (22°C), are summarized (by the presentation of arithmetic means when duplicate mixes were tested) in Table II.

## TABLE II

| Mix No. | Admixtures (weight %) | | | ASTM C403 Set Times (hours) | |
|---|---|---|---|---|---|
| | KBr | $Ca(NO_2)_2$ | TEA | Initial | Final |
| 1. | -- | -- | -- | 5.80 | 7.22 |
| 2. | 0.05 | -- | -- | 5.48 | 6.59 |
| 3. | 0.10 | -- | -- | 5.30 | 6.57 |
| 4. | 0.20 | -- | -- | 5.25 | 6.16 |
| 5. | 0.05 | 0.50 | -- | 5.12 | 6.32 |
| 6. | 0.10 | 0.50 | -- | 4.66 | 5.89 |
| 7. | 0.20 | 0.50 | -- | 4.75 | 5.85 |
| 8. | -- | 0.5 | 0.03 | 5.38 | 6.55 |
| 9. | -- | 1.0 | 0.06 | 5.06 | 5.96 |
| 10. | -- | 1.5 | 0.09 | 4.74 | 5.49 |
| 11. | 0.05 | 0.5 | 0.03 | 4.83 | 5.83 |
| 12. | 0.10 | 0.5 | 0.03 | 4.73 | 5.83 |
| 13. | 0.20 | 0.5 | 0.03 | 4.74 | 5.68 |

## Compressive Strength (PSI)

| Mix No. | 1-day | (% of reference) | 3-day | (% of reference) |
|---|---|---|---|---|
| 1. | 1358 | (100) | 2704 | (100) |
| 2. | 1422 | (105) | 2927 | (108) |
| 3. | 1528 | (113) | 3115 | (115) |
| 4. | 1536 | (113) | 2820 | (104) |
| 5. | 1376 | (101) | 3127 | (116) |
| 6. | 1405 | (103) | 3194 | (118) |
| 7. | 1517 | (112) | 3595 | (133) |
| 8. | 1430 | (105) | 3107 | (115) |
| 9. | 1405 | (104) | 3367 | (125) |
| 10. | 1436 | (106) | 3606 | (133) |
| 11. | 1561 | (116) | 3409 | (126) |
| 12. | 1574 | (116) | 3396 | (126) |
| 13. | 1850 | (136) | 3424 | (127) |

As seen as Table II, admixtures according to the present invention (mix nos. 5-7 and 11-13) decreased initial and final setting times, and increased early strength, in the Portland cement/fly ash concrete. Surprisingly the reduction in initial setting time achieved with the present invention in mix 12 exceeded the additive set acceleration of the separate ingredients in mixes 3 and 8. Similar unexpected "more than additive" initial set acceleration is seen in mix 11 versus mixes 2 plus 8 and mix 13 versus mixes 4 plus 8.

Although such direct comparisons cannot be made in the case of the additives of mixes 5 to 7, it is important to note that the set accelerations achieved thereby are substantial.

The improvements in the early strength of the concretes tested also are noteworthy. The results of the 1 and 3 day strengths of mixes 11 and 13 (containing admixtures of the present invention) exhibit more than additive increases when compared to mixes 2 plus 8 and 4 plus 8, respectively. The increase (compared to blank) in 1 and 3 day strength exhibited in mixes 5 to 7 are substantial.

## Example Two

A Portland cement (source B) concrete, containing approximately 500 pcy cement, 1480 pcy sand, 1730 pcy "coarse" aggregate and 310 pcy water was prepared ("blank") and allowed to set at 72°F (22°C). An admixture according to the present invention, comprising potassium bromide, calcium nitrite and triethanaolamine, was added to the concrete at various dosages.

The setting times and early strengths obtained with this admixture were compared with the "blank" and with results obtained with an admixture of calcium nitrite and triethanolamine. The pertinent results (i.e., set times and 1 and 3 day strengths) appear in Table III.

TABLE III

| | Admixtures (weight %) | | | ASTM C403 Set Times | |
|---|---|---|---|---|---|
| Mix No. | KBr | Ca(NO$_2$)$_2$ | TEA | Initial | Final |
| 1. | -- | -- | -- | 4.37 | 5.72 |
| 2. | -- | 0.5 | 0.03 | 3.54 | 4.76 |
| 3. | 0.02 | 0.5 | 0.03 | 3.43 | 4.60 |
| 4. | 0.04 | 0.5 | 0.03 | 3.44 | 4.37 |
| 5. | 0.06 | 0.5 | 0.03 | 3.35 | 4.46 |
| 6. | 0.10 | 0.5 | 0.03 | 3.16 | 4.09 |
| 7. | -- | 1.0 | 0.06 | 3.20 | 4.30 |
| 8. | 0.04 | 1.0 | 0.06 | 3.14 | 4.27 |
| 9. | 0.10 | 1.0 | 0.06 | 3.03 | 4.08 |
| 10. | 0.20 | 1.0 | 0.06 | 3.01 | 3.87 |
| 11. | -- | 1.5 | 0.09 | 2.69 | 3.72 |
| 12. | 0.04 | 1.5 | 0.09 | 2.91 | 3.67 |
| 13. | 0.10 | 1.5 | 0.09 | 2.62 | 3.35 |
| 14. | 0.20 | 1.5 | 0.09 | 2.50 | 3.32 |

Compressive Strengths

| Mix No. | 1-day | (% of reference) | 3-day | (% of reference) |
|---|---|---|---|---|
| 1. | 1419 | (100) | 2530 | (100) |
| 2. | 1854 | (131) | 3005 | (119) |
| 3. | 1731 | (122) | 3075 | (122) |
| 4. | 1690 | (119) | 2846 | (112) |
| 5. | 1978 | (139) | 2986 | (118) |
| 6. | 1768 | (125) | 2992 | (118) |
| 7. | 1769 | (125) | 3335 | (132) |
| 8. | 1640 | (116) | 3092 | (122) |
| 9. | 1801 | (127) | 3387 | (134) |
| 10. | 1987 | (140) | 3469 | (137) |
| 11. | 1876 | (132) | 3731 | (147) |
| 12. | 1893 | (133) | 3595 | (142) |
| 13. | 2148 | (151) | 3820 | (151) |
| 14. | 2086 | (147) | 3982 | (157) |

At all dosage rates tested, an admixture of the present invention (comprising $Ca(NO_2)_2$, KBr and triethanolamine) produced substantial set acceleration and early strength increases when compared to the "blank" Portland cement concrete. In this particular concrete, the presence of KBr did not substantially add to the set accelerating and strength increasing properties of the calcium nitrite and triethanolamine admixture.

## Example Three

The effectiveness of an admixture according to the present invention was tested in a Portland cement/fly ash concrete which was allowed to set in a controlled 50°F (10°C) atmosphere. In addition to approximately 400 pcy of Portland cement (source B) and 100 pcy of fly ash (source F), the concrete contained 1490 pcy of sand, 1740 pcy of "coarse" aggregate and 280 pcy of water. The setting times and compressive strengths (at 1 and 7 days) of a "blank" and concrete containing various dosages of an admixture of KBr, $Ca(NO_2)_2$ and triethanolamine (according to the present invention) and an admixture of $Ca(NO_2)_2$ and triethanolamine (control), are reported in Table IV.

TABLE IV

| | Admixtures (weight %) | | | ASTM C403 Set Times | |
|---|---|---|---|---|---|
| Mix No. | KBr | $Ca(NO_2)2$ | TEA | Initial | Final |
| 1. | -- | -- | 0.03 | 10.51 | 13.28 |
| 2. | -- | 0.5 | 0.03 | 8.31 | 10.91 |
| 3. | 0.25 | 0.5 | 0.03 | 6.58 | 8.17 |
| 4. | -- | 1.0 | 0.06 | 7.70 | 9.91 |
| 5. | 0.5 | 1.0 | 0.06 | 5.80 | 7.90 |
| 6. | -- | 1.5 | 0.09 | 6.89 | 9.42 |
| 7. | 0.75 | 1.5 | 0.09 | 5.75 | 7.47 |

Compressive Strengths

| Mix No. | 1-day ($10^0$) | (% reference) | 7-day ($10^0$) | (% reference) |
|---|---|---|---|---|
| 1. | 190 | (100) | 1962 | (100) |
| 2. | 544 | (286) | 3049 | (155) |
| 3. | 762 | (401) | 3014 | (154) |
| 4. | 588 | (309) | 3208 | (164) |
| 5. | 810 | (426) | 3232 | (165) |
| 6. | 490 | (258) | 3016 | (154) |
| 7. | 858 | (452) | 3440 | (175) |

The test data of Table IV clearly shows that the tested admixture produces very acceptable set accleration and early strength gains over those of the non-admixtured reference (mix no. 1). In each case, the presence of KBr (according to the invention) resulted in substantial improvements over the results obtained with the control admixture.

## Example Four

An admixture according to the present invention consisting of potassium bromide, calcium nitrite and triethanolamine was added at various dosages to a concrete containing (approximately) 400 pcy Portland cement (source B), 100 pcy fly ash (source G), 1500 pcy sand, 1740 pcy coarse aggregate and 290 pcy water. The resulting marked set acceleration and early (1, 3 and 7 day) strength enhancement seen in several of the mixes is reported in Table V.

## TABLE V

| | Admixtures (weight %) | | | ASTM C403 Set Times | | |
|---|---|---|---|---|---|---|
| Mix No. | KBr | Ca(NO$_2$)$_2$ | TEA | Initial | Final | 1-day |
| 1. | -- | -- | -- | 6.29 | 7.64 | 1014 |
| 2. | -- | 0.5 | 0.03 | 5.69 | 7.25 | 1197 |
| 3. | 0.05 | 0.5 | 0.03 | 4.61 | 5.97 | 2062 |
| 4. | 0.10 | 0.5 | 0.03 | 5.06 | 6.51 | 1299 |
| 5. | 0.20 | 0.5 | 0.03 | 5.14 | 6.67 | 1480 |

### Compressive Strengths

| Mix No. | (% reference) | 3-day | (% reference) | 7-day | (% reference) |
|---|---|---|---|---|---|
| 1. | (100) | 2822 | (100) | 3537 | (100) |
| 2. | (118) | 3296 | (117) | 4003 | (113) |
| 3. | (203) | 4525 | (160) | 5043 | (143) |
| 4. | (128) | 3441 | (122) | 4192 | (119) |
| 5. | (146) | 3957 | (140) | 4226 | (119) |

## CLAIMS

1. A composition that includes, or that is for use with, hydraulic cement for accelerating set and enhancing early strength and that comprises an alkali metal or alkaline earth metal nitrite salt (A), characterised in that it also comprises an alkali metal or alkaline earth metal bromide salt (B).

2. A composition according to claim 1 further comprising triethanolamine (C).

3. A composition according to claim 1 or claim 2 wherein the weight ratio A:B is from about 1:3 to 40:1.

4. A composition according to claim 2 wherein the weight ratio A:B:C is from about 1:3:0.03 to about 40:1:5.4.

5. A composition according to any preceding claim whrein (A) is calcium nitrite.

6. A composition according to any preceding claim wherein (B) is potassium bromide.

7. A composition according to any preceding claim that comprises the nitrite and the bromide and that is for addition to a hydraulic cement.

8. A composition according to any of claims 1 to 6 and that includes a hydraulic cement, preferably Portland cement.

9. A composition according to claim 8 comprising about 0.01 to 12% A and about 0.01 to 6% B, the percentages being by weight based on the weight of the hydraulic cement.

10. A composition according to claim 8 or claim 9 comprising about 0.003 to 3% C by weight based on the weight of the hydraulic cement.

11. A composition according to any of claims 8 to 10 additionally comprising pozzolan, preferably in an amount of about 15 to 25% by weight based on the weight of cement.

12. A composition according to claim 11 in which the pozzolan in fly ash.

13. A concrete formed of a composition according to any of claims 8 to 12.

## EUROPEAN SEARCH REPORT

| | DOCUMENTS CONSIDERED TO BE RELEVANT | | EP 87300263.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | DE - A1 - 2 740 114 (TURPIN)<br>   * Claims *<br>-- | 1,6-9,<br>11-13 | C 04 B 22/08<br>C 04 B 28/04<br>C 04 B 24/12 |
| X | EP - A1 - 0 126 044 (ALEXANDERSON et al.)<br>   * Claims; page 3, lines 18-26 *<br>-- | 1 | |
| Y | DE - A1 - 3 121 814 (W.R. GRACE & CO.)<br>   * Claims *<br>---- | 1,2,5,<br>8,10-<br>13 | |

| | TECHNICAL FIELDS SEARCHED (Int. Cl.4) |
|---|---|
| | C 04 B |

The present search report has been drawn up for all claims

| Place of search | Date of completion of the search | Examiner |
|---|---|---|
| VIENNA | 08-04-1987 | BECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document